# EUROPEAN PATENT SPECIFICATION

(11) **EP 2 350 185 B1**
(45) Date of publication and mention of the grant of the patent: **08.05.2013**
(21) Application number: 09761126.3
(22) Date of filing: 25.11.2009
(51) Int. Cl.: C08L 23/08, C09D 123/08, G09F 17/00

(54) **RECYCLABLE COATED BANNER SUBSTRATE**
REZYKLIERBARES BESCHICHTETES BANNERSUBSTRAT
SUBSTRAT DE BANDEAU REVÊTU RECYCLABLE

(30) Priority: 26.11.2008 US 118129 P
(43) Date of publication of application: 03.08.2011
(73) Proprietor: E. I. du Pont de Nemours and Company, Wilmington, DE 19898 (US)
(72) Inventor: TEATHER, Eric, W., Elkton, Maryland 21921 (US); CHOU, Richard T., Hockessin, DE 19707 (US); PRYOR, Seqwana T., League City, TX 77573 (US)
(74) Representative: Heinemann, Monica
(86) International application number: PCT/US2009/065880
(87) International publication number: WO 2010/062939

(56) References cited:
- US-A1- 2003 180 541
- US-A1- 2006 025 527
- US-A1- 2006 148 988
- US-A1- 2006 160 952
- US-A1- 2008 255 303
- US-B1- 6 291 048

## Description

### FIELD OF THE INVENTION

The present invention relates to banners comprising materials suitable for recycling.

### BACKGROUND OF THE INVENTION

Banner substrates suitable for printing can be made from various materials such as nonwovens, wovens, knits and films which are in turn made from different polymers including polyolefins, polyesters and polyamides. Sometimes to improve printability on the banner substrate, a coating is added. One common coating is polyvinylchloride. Also, additional coatings can be applied to provide improve processing or aesthetic properties.

It is desirable to make coated banner substrates that are recyclable so that they do not add to the solid waste problem. Unfortunately, polyvinylchloride is difficult to recycle because of its chemical dissimilarity to typical banner substrates.

What is needed is a coated banner substrate that is suitable for recycling wherein the coating and the banner substrate are chemically compatible. This type of banner could be recycled via a simple process of grinding the banner into chips and feeding the chips to a melt extruder to prepare polymer pellets for further melt processing into new products.

### SUMMARY OF THE INVENTION

A recyclable coated banner substrate comprising (1) a composition comprising (a) a copolymer obtained from copolymerization of ethylene and maleic anhydride or its functional equivalent, wherein maleic anhydride or its functional equivalent is present in the copolymer in an amount of from 3 to 15 weight %, in an amount from about 5 to about 95 weight % of the composition, and (b) at least one ethylene copolymer obtained from copolymerization of ethylene with a polar monomer wherein said polar comonomer is present in the copolymer in an amount of from 6 to 40 weight %, wherein said ethylene copolymer is selected from the group consisting of ethylene/vinyl acetate copolymers, ethylene/alkyl (meth)acrylate copolymers and ethylene/(meth)-acrylate/carbon monoxide terpolymers, in an amount from about 5 to about 95 weight % of the composition, and (2) a planar polyolefin banner substrate comprising two sides wherein the composition is affixed to at least one side of the planar polyolefin banner substrate.

### DETAILED DESCRIPTION OF THE INVENTION

Recyclable coated banner substrates can be made comprising (1) a composition comprising (a) copolymers of ethylene and maleic anhydride or its functional equivalents and (b) ethylene copolymers with polar comonomers such as ethylene/vinyl acetate copolymers, ethylene/alkyl (meth)acrylate copolymers and ethylene/(meth)acrylate/carbon monoxide terpolymers, and (2) a planar polyolefin banner substrate wherein the composition is affixed to at least one side of the planar polyolefin banner substrate.

Compositions suitable for the present invention are disclosed in U.S. patent application publication number 2006/0160952, herein incorporated by reference. These compositions comprise (a) a copolymer obtained from copolymerization of ethylene and maleic anhydride or its functional equivalent, wherein maleic anhydride or its functional equivalent is present in the copolymer in an amount of from 3 to 15 weight %, in an amount from about 5 to about 95 weight % of the composition, and (b) at least one ethylene copolymer obtained from copolymerization of ethylene with a polar monomer wherein said polar comonomer is present in the copolymer in an amount of from 6 to 40 weight %, wherein said copolymer is selected from the group consisting of ethylene/vinyl acetate copolymers, ethylene/alkyl (meth)acrylate copolymers and ethylene/(meth)-acrylate/carbon monoxide terpolymers, in an amount from about 5 to about 95 weight % of the composition. Additional additives can be added to provide color, improve opacity and improve UV stability.

Planar polyolefin banner substrate suitable for the present invention have two sides. The substrate comprises polyolefins of polyethylene and polypropylene. The substrate is selected from the group consisting of nonwovens, wovens, knits and films. The nonwovens comprise fibers made by a melt spun, spun bond or flash spun process.

The coated banner substrate is prepared by affixing the composition to at least one side of the planar polyolefin banner substrate. For example, the composition can be extrusion coated onto the substrate. Also, the composition can be applied to the substrate by powder scattering, powder dot application or paste dot application.

The coated banner substrate can be any color, typically white.

The coated banner substrate may be printed thereon using ink to create the desired message, design or image.

### EXAMPLE

Hereinafter the present invention will be described in more detail in the following example.

A recyclable coated banner substrate was produced by extrusion coating Tyvek® 1085D (flash spun high density polyethylene available from DuPont) having a basis weight of 108 gm² with a coating composition of 95% by weight of Entiracoat™ 100 (ethylene acid copolymer available from DuPont) and 5% by weight of Ampacet White UV PE MB 816341 (additive for improving opacity from Ampacet) providing a basis weight of approximately 100 gm² on each side.

Since the Tyvek® and the Entiracoat™ 100 are chemically similar, they can easily be recycled via melt extrusion.

## Claims

1. A recyclable coated banner substrate comprising:
(1) a composition comprising:
(a) a copolymer obtained from copolymerization of ethylene and maleic anhydride or its functional equivalent, wherein maleic anhydride or its functional equivalent is present in the copolymer in an amount of from 3 to 15 weight %, in an amount from about 5 to about 95 weight % of the composition; and
(b) at least one ethylene copolymer obtained from copolymerization of ethylene with a polar monomer wherein said polar comonomer is present in the copolymer in an amount of from 6 to 40 weight %, wherein said ethylene copolymer is selected from the group consisting of ethylene/vinyl acetate copolymers, ethylene/alkyl (migth)acrylate copolymers and ethylene/(meth)-acrylate/carbon monoxide terpolymers, in an amount from about 5 to about 95 weight % of the composition; and
(2) a planar polyolefin banner substrate comprising two sides
wherein the composition is affixed to at least one side of the planar polyolefin banner substrate.

2. The recyclable coated banner substrate of claim 1 wherein the copolymer of (a) is obtained from copolymerization of ethylene and maleic anhydride.

3. The recyclable coated banner substrate of claim 1 wherein the copolymer of (a) is obtained from copolymerization of ethylene and a functional equivalent of maleic anhydride selected from maleic acid and/or salts thereof, maleic acid diesters, maleic acid monoesters, itaconic acid, fumaric acid, fumaric acid monoester, and mixtures of any of these.

4. The recyclable coated banner substrate of claim 3 wherein the maleic diesters or monoesters are esters of C1 to C4 alcohols.

5. The recyclable coated banner substrate of claim 4 wherein the copolymer of (a) is obtained from copolymerization of ethylene and a maleic acid monoester.

6. The recyclable coated banner substrate of claim 5 wherein the maleic acid monoester is ethyl hydrogen maleate.

7. The recyclable coated banner substrate of claim 2 wherein component (b) is an ethylene/vinyl acetate copolymer.

8. The recyclable coated banner substrate of claim 2 wherein component (b) is an ethylene/alkyl (meth)acrylate copolymer.

9. The recyclable coated banner substrate of claim 1 wherein the planar polyolefin banner substrate comprises polyolefins of polyethylene and polypropylene.

10. The recyclable coated banner substrate of claim 1 wherein the planar polyolefin banner substrate is selected from the group consisting of nonwovens, wovens, knits and films.

11. The recyclable coated banner substrate of claim 10 wherein the nonwovens comprise fibers made by a melt spun, spun bond or flash spun process.

12. The recyclable coated banner substrate of claim 1 prepared by extrusion coating the composition comprising (a) and (b) onto the planar polyolefin banner substrate.

13. The recyclable coated banner substrate of claim 1 prepared by applying a composition comprising (a) and (b) onto the planar polyolefin banner substrate by powder scattering, powder dot application or paste dot application.

14. A printed banner comprising the coated banner substrate of claim 1 printed thereupon.

## Patentansprüche

1. Rezyklierbares beschichtetes Bannersubstrat umfassend:
(1) eine Zusammensetzung umfassend
(a) ein Copolymer, das durch Copolymerisation von Ethylen und Maleinsäureanhydrid oder seinem funktionellen Äquivalent erhalten wird, wobei das Maleinsäureanhydrid oder sein funktionelles Äquivalent in dem Copolymer in einer Menge von 3 bis 15 Gew.-%, in einer Menge von etwa 5 bis etwa 95 Gew.-% auf die Zusammensetzung bezogen, vorliegt; und
(b) mindestens ein Ethylencopolymer, das durch Copolymerisation von Ethylen mit einem polaren Monomer erhalten wird, wobei das polare Comonomer in dem Copolymer in einer Menge von 6 bis 40 Gew.-%, wobei das Ethylencopolymer aus der Gruppe ausgewählt ist bestehend aus Ethylen-Vinylacetat-Copolymeren, Ethylen-Alkyl(meth)acrylat-Copolymeren und Ethylen-(Meth)acrylat-Kohlenmonoxid-Terpolymeren, in einer Menge von etwa 5 bis etwa 95 Gew.-% auf die Zusammensetzung bezogen, vorliegt; und
(2) ein planares Polyolefinbannersubstrat umfassend zwei Seiten, wobei die Zusammensetzung an mindestens einer Seite des planaren Polyolefinbannersubstrats befestigt ist.

2. Rezyklierbares beschichtetes Bannersubstrat nach Anspruch 1, wobei das Copolymer von (a) durch Copolymerisation von Ethylen und Maleinsäureanhydrid erhalten wird.

3. Rezyklierbares beschichtetes Bannersubstrat nach Anspruch 1, wobei das Copolymer von (a) durch Copolymerisation von Ethylen und einem funktionellen Äquivalent von Maleinsäureanhydrid ausgewählt unter Maleinsäure und/oder Salzen davon, Maleinsäurediestern, Maleinsäuremonoestern, Itaconsäure, Fumarsäure, Fumarsäuremonoester und Mischungen von irgendwelchen derselben erhalten wird.

4. Rezyklierbares beschichtetes Bannersubstrat nach Anspruch 3, wobei die Maleinsäurediester oder -monoester Ester von C1- bis C4-Alkoholen sind.

5. Rezyklierbares beschichtetes Bannersubstrat nach Anspruch 4, wobei das Copolymer von (a) durch Copolymerisation von Ethylen und einem Maleinsäuremonoester erhalten wird.

6. Rezyklierbares beschichtetes Bannersubstrat nach Anspruch 5, wobei der Maleinsäuremonoester Ethylhydrogenmaleat ist.

7. Rezyklierbares beschichtetes Bannersubstrat nach Anspruch 2, wobei die Komponente(b) ein Ethylen-Vinylacetat-Copolymer ist.

8. Rezyklierbares beschichtetes Bannersubstrat nach Anspruch 2, wobei die Komponente (b) ein Ethylen-Alkyl(meth)acrylat-Copolymer ist.

9. Rezyklierbares beschichtetes Bannersubstrat nach Anspruch 1, wobei das planare Polyolefinbannersubstrat Polyolefine von Polyethylen und Polypropylen umfasst.

10. Rezyklierbares beschichtetes Bannersubstrat nach Anspruch 1, wobei das planare Polyolefinbannersubstrat aus der Gruppe ausgewählt ist bestehend aus Vliesstoffen, Geweben, Gestrickten und Folien.

11. Rezyklierbares beschichtetes Bannersubstrat nach Anspruch 10, wobei die Vliesstoffe Fasern umfassen, die durch ein Schmelzspinn-, Spinnvlies- oder Flash-Spinnverfahren hergestellt sind.

12. Rezyklierbares beschichtetes Bannersubstrat nach Anspruch 1, das durch schichtförmiges Extrusionsauftragen der Zusammensetzung, die (a) und (b) umfasst, auf das planare Polyolefinbannersubstrat hergestellt wird.

13. Rezyklierbares beschichtetes Bannersubstrat nach Anspruch 1, das durch Aufbringen einer Zusammensetzung, die (a) und (b) umfasst, auf das planare Polyolefinbannersubstrat durch Pulverstreuen, Pulverpunktaufbringen oder Pastenpunktaufbringen hergestellt wird.

14. Bedrucktes Banner umfassend das beschichtete Bannersubstrat nach Anspruch 1, das darauf gedruckt worden ist.

## Revendications

1. Substrat de bandeau enduit recyclable comprenant:
(1) une composition comprenant:
(a) un copolymère obtenu à partir de la copolymérisation d'éthylène et d'anhydride maléique ou son équivalent fonctionnel, dans lequel l'anhydride maléique ou son équivalent fonctionnel est présent dans le copolymère en une quantité de 3 à 15 % en poids, en une quantité d'environ 5 à environ 95 % en poids de la composition; et
(b) au moins un copolymère d'éthylène obtenu à partir de la copolymérisation de l'éthylène avec un monomère polaire dans lequel ledit comonomère polaire est présent dans le copolymère en une quantité de 6 à 40 % en poids, dans lequel ledit copolymère d'éthylène est sélectionné parmi le groupe constitué des copolymères d'éthylène/acétate de vinyle, des copolymères d'éthylène/(méth)acrylate d'alkyle et des terpolymères d'éthylène/(méth)acrylate/monoxyde de carbone, en une quantité d'environ 5 à environ 95 % en poids de la composition; et
(2) un substrat de bandeau plan de polyoléfine comprenant deux faces dans lequel la composition est apposée sur au moins une face du substrat de bandeau plan de polyoléfine.

2. Substrat de bandeau enduit recyclable selon la revendication 1, dans lequel le copolymère de (a) est obtenu à partir de la copolymérisation d'éthylène et d'anhydride maléique.

3. Substrat de bandeau enduit recyclable selon la revendication 1, dans lequel le copolymère de (a) est obtenu à partir de la copolymérisation d'éthylène et d'un équivalent fonctionnel d'anhydride maléique sélectionné parmi l'acide maléique et/ou ses sels, les diesters d'acide maléique, les monoesters d'acide maléique, l'acide itaconique, l'acide fumarique, le monoester d'acide fumarique et les mélanges de n'importe lesquels d'entre eux.

4. Substrat de bandeau enduit recyclable selon la revendication 3, dans lequel les diesters ou les monoesters maléiques sont des esters d'alcools en C₁ à C₄.

5. Substrat de bandeau enduit recyclable selon la revendication 4, dans lequel le copolymère de (a) est obtenu à partir de la copolymérisation d'éthylène et d'un monoester d'acide maléique.

6. Substrat de bandeau enduit recyclable selon la revendication 5, dans lequel le monoester d'acide maléique est l'hydrogénomaléate d'éthyle.

7. Substrat de bandeau enduit recyclable selon la revendication 2, dans lequel le composant (b) est un copolymère d'éthylène/acétate de vinyle.

8. Substrat de bandeau enduit recyclable selon la revendication 2, dans lequel le composant (b) est un copolymère d'éthylène/(méth)acrylate d'alkyle.

9. Substrat de bandeau enduit recyclable selon la revendication 1, dans lequel le substrat de bandeau plan de polyoléfine comprend des polyoléfines de polyéthylène et de polypropylène.

10. Substrat de bandeau enduit recyclable selon la revendication 1, dans lequel le substrat de bandeau plan de polyoléfine est sélectionné parmi le groupe constitué des non-tissés, des textiles tissés, des textiles tricotés et des films.

11. Substrat de bandeau enduit recyclable selon la revendication 10, dans lequel les non-tissés comprennent des fibres fabriquées à partir d'un procédé de filage par fusion, filage direct ou filage éclair.

12. Substrat de bandeau enduit recyclable selon la revendication 1, préparé par revêtement par extrusion de la composition comprenant (a) et (b) sur le substrat de bandeau plan de polyoléfine.

13. Substrat de bandeau enduit recyclable selon la revendication 1, préparé par l'application d'une composition comprenant (a) et (b) sur le substrat de bandeau plan de polyoléfine par saupoudrage, application par points de poudre ou application par points de pâte.

14. Bandeau imprimé comprenant le substrat de bandeau enduit selon la revendication 1 imprimé dessus.
